Europäisches Patentamt

European Patent Office

Office européen des brevets

(19)

(11) **EP 0 493 286 B1**

(12) **FASCICULE DE BREVET EUROPEEN**

(45) Date de publication et mention
de la délivrance du brevet:
**24.07.1996 Bulletin 1996/30**

(51) Int Cl.⁶: **H04L 29/06**

(21) Numéro de dépôt: **91460055.6**

(22) Date de dépôt: **13.12.1991**

(54) **Système de transmission par paquets à compression de données, procédé et équipement correspondant**

System, Verfahren und Gerät zur Paketübertragung mit Datenkompression

System, method and apparatus for packet transmission with date compression

(84) Etats contractants désignés:
**AT BE CH DE DK ES GB GR IT LI LU MC NL SE**

(30) Priorité: **19.12.1990 FR 9016384**

(43) Date de publication de la demande:
**01.07.1992 Bulletin 1992/27**

(73) Titulaire: **OUEST STANDARD TELEMATIQUE S.A.
35510 Cesson Sevigne (FR)**

(72) Inventeurs:
• **Lane, Thao
F-35000 Rennes (FR)**

• **Malorey, Didier
F-35000 Rennes (FR)**
• **Miller, Karl
F-35000 Rennes (FR)**

(74) Mandataire: **Corlau, Vincent
c/o Cabinet Vidon,
Immeuble Germanium,
80 avenue des Buttes de Coesmes
35700 Rennes (FR)**

(56) Documents cités:
**WO-A-84/00266**      **US-A- 4 058 672**
**US-A- 4 464 650**

## Description

Le domaine de l'invention est celui de la transmission de données en mode paquet, sur tout type de réseaux, et notamment sur les réseaux relativement complexes, faisant intervenir la notion de circuit virtuel entre deux terminaux émetteurs/récepteurs en communication.

Plus précisément, l'invention concerne un procédé de transmission par paquets mettant en oeuvre un algorithme adaptatif de compression de données.

L'invention s'applique notamment, mais non exclusivement, aux échanges de données selon le protocole X25, normalisé par le CCITT en 1984. Dans ce cas, et plus généralement chaque fois qu'il est nécessaire d'emprunter un réseau public de communication, l'usager doit payer un droit, qui est par exemple dépendant du type de ligne affectée et/ou du temps d'utilisation de la ligne. C'est notamment le cas des lignes spécialisées attribuées par les services publics, dont le coût est proportionnel au débit maximum de la ligne.

On connaît déjà, dans le domaine de la transmission de données, de nombreux systèmes mettant en oeuvre des mécanismes adaptatifs de compression. Toutefois, ces systèmes ne concernent que les liaisons point à point ou point-multipoint, mais non des réseaux complets de communication.

Les algorithmes de compression adaptatifs évoluent dynamiquement en fonction des caractéristiques des flux de données, contrairement aux algorithmes statiques, qui utilisent des tables de correspondance préétablies. Ils peuvent par exemple apprendre les règles de codage en analysant la fréquence des caractères ou des chaînes de caractères, et les stocker dans un "dictionnaire" mis à jour en permanence. Pour un sens de transmission donné, un algorithme de compression adaptatif doit être exécuté à la fois du coté compresseur et du coté décompresseur de façon parallèle et parfaitement synchronisée pour que les extrémités aient à tout moment des dictionnaires rigoureusement identiques. Plus complexes que les algorithmes statiques, ils sont aussi plus performants. Un algorithme de ce type, dit algorithme de "Ziv Lempel", a été par exemple retenu dans la recommandation V42bis du CCITT, pour les modems asynchrones.

Dans le cas de transmission par paquets, par exemple selon la norme X25, de nombreuses difficultés se posent pour la mise en oeuvre de tels systèmes de compression.

Tout d'abord, il n'est pas possible, actuellement, de réaliser la compression directement dans les terminaux, du fait de l'absence de norme. Il est donc nécessaire de reporter cette compression dans les équipements réseaux. En général, une communication entre deux terminaux passe par un ensemble de noeuds intermédiaires. Le report de la compression au niveau des équipements réseaux impose, tout au moins à la première analyse, de répéter l'opération de décompression et de compression dans chacun de ces noeuds intermédiaires.

Par ailleurs, il faut noter que chacun des équipements réseaux gère le plus souvent plusieurs communications simultanément, ce qui impose, pour assurer de façon efficace les opérations de décompression et de compression, d'importants moyens de mémorisation et de traitement, dimensionnés de façon à faire face au maximum de communications simultanées possibles.

L'invention a notamment pour objectif de pallier les différents inconvénients de l'état de la technique, et de répondre aux différentes contraintes imposées par la transmission par paquets.

Plus précisément, l'invention a pour objectif de fournir un système de transmission par paquets, mettant en oeuvre un algorithme de compression de données adaptatif, de façon en particulier à apporter une augmentation virtuelle du débit des lignes utilisées pour la transmision.

L'invention a notamment pour objectif de fournir un tel système, dans lequel la communication entre deux terminaux se fait sur un circuit virtuel, par l'intermédiaire d'un ensemble d'équipements, ou noeuds, reliés par des lignes de communication.

Un objectif particulier de l'invention est de fournir un tel système, effectuant une compression sur des circuits virtuels, et non sur chacune des lignes de transmission internoeud (circuit physique).

Un autre objectif de l'invention est de fournir un tel système, dans lequel les opérations de compression et de décompression peuvent être mises en oeuvre dans l'un quelconque des équipements constituant la chaîne de transmission. De cette façon, il est possible de répartir les charges de traitement, tout en optimisant les distances sur lesquelles la compression est effectuée.

Un autre objectif de l'invention est encore de fournir un système de compression de données efficace et très souple. Notamment, l'invention peut prendre en compte de façon indépendante les deux sens de transmission d'une communication, ainsi que de nombreux paramètres, tels que la charge de chaque équipement, le rendement d'une compression, l'intérêt d'une compression, etc...

De façon compémentaire, l'invention a également pour objectif de fournir un procédé de transmission pour un tel système.

Ces objectifs, ainsi que d'autres qui apparaîtront par la suite, sont atteints selon l'invention à l'aide d'un système selon la revendication 1.

Par terminal, on entend tout système d'extrémité pouvant se connecter à un réseau (ordinateur, frontal d'ordinateurs, serveur de base de données, terminal de saisie, etc...). La notion de terminal s'oppose ainsi à la notion d'équipement intermédiaire, qui assure la connexion d'au moins un terminal et/ou d'au moins un autre équipement intermédiaire, de façon à constituer un réseau de communication.

Selon l'invention, deux terminaux peuvent donc être associés, pour une communication particulière compressée. Ces deux terminaux peuvent éventuellement gérer plusieurs communications entre eux et/ou avec d'autres terminaux simultanément. Le système assure de façon optimum la répartition des opérations de compression entre les équipements disponibles. La compression est donc gérée communication par communication, sur chaque circuit virtuel, dans chaque sens de transmission.

L'invention concerne également un procédé de transmission de données selon la revendication 2.

Clairement, l'invention concerne également tout type d'équipement de connexion utilisé dans le système décrit ci-dessus, et/ou mettant en oeuvre le procédé de l'invention.

D'autres caractéristiques et avantages de l'invention apparaîtront à la lecture de la description suivante d'un mode de réalisation préférentiel de l'invention, donné à titre d'exemple illustratif et non limitatif, et des dessins annexés, dans lesquels :

- la figure 1 présente un schéma synoptique illustrant un exemple de négociation de la compression d'une communication ;
- la figure 2 illustre un transfert de données entre deux terminaux, le mode de compression étant activé dans l'un des sens de transmission ;
- la figure 3 illustre la procédure de désactivation d'une compression, dans l'un des sens de transmission.

Le mode de réalisation décrit ci-dessous s'applique notamment aux réseaux de communication selon la norme X25. Il est clair cependant que l'invention ne se limite pas à ce type de réseaux, mais peut au contraire trouver des applications dans tous les cas où des échanges de données se font en mode paquet, et également en mode trame.

Plus précisément, le système présenté vise à équiper des équipements de connexion à des réseaux de communication, et notamment des commutateurs et/ou des concentrateurs comprenant de moyens de compression de données.

Avant de présenter plus précisément les mécanismes de négociation d'une compression selon l'invention, on décrit un exemple d'algorithme adaptatif pouvant être mis en oeuvre, et les principes généraux de transfert des paquets.

L'algorithme de compression utilisé a pour base un algorithme dit de Ziv Lempel. Les principes de base de codage, décodage et mise à jour des dictionnaires sont proches de ceux décrits dans la recommandation V42 bis. En revanche, les fonctions de contrôle de la compression et la négociation sont réalisées de façon différente, ainsi qu'on le verra plus loin.

Les états et les modes de transfert des données relatifs à la compression sur un circuit virtuel sont avantageusement, pour chaque sens de transmission, les suivants :

- Etat "compression désactivée" : dans cet état aucune ressource (mémoire pour les dictionnaires et temps de traitement dans l'unité centrale) n'est affectée à la compression. C'est l'état initial lors de l'établissement d'une communication sans compression ;
- Etat "compression activée" : dans cet état, un dictionnaire est affecté à la compression, dans chaque équipement réalisant la compression et/ou la décompression. Le transfert de données peut alors être réalisé dans deux modes, pour chaque paquet à transmettre :

  . Mode compressé : les données sont transférées sous forme compressée ;
  . Mode transparent : les données sont transférées sous leur forme initiale.

Dans l'état de compression activée, l'algorithme de codage/décodage est toujours exécuté, pour la mise à jour des dictionnaires, que les données soient transférées en mode transparent ou compressé. Plus précisément, l'équipement chargé de la décompression recevant un paquet exécute soit l'algorithme de codage, si le paquet a été transféré en mode compressé, soit l'algorithme de décodage, dans le cas contraire.

La transmission par paquets impose par ailleurs certaines contraintes, vis à vis de la compression. Notamment, les entêtes doivent restés lisibles pour tous les équipements du circuit de transmission. L'algorithme de compression est donc appliqué exclusivement au champ données des paquets de données.

Un paquet transféré en mode compressé est codé, dans le mode de réalisation décrit, par des mots de codes de longueur non multiple de 8 bits. Le dernier octet d'un paquet pourra donc contenir des bits de bourrage permettant de récupérer l'alignement octet.

Pour que la compression soit intéressante, il est clairement préférable que chaque paquet transféré soit toujours de longueur inférieure ou égale au paquet initial.

Il est donc nécessaire de vérifier régulièrement l'efficacité de la compression. Plutôt que de n'effectuer périodiquement qu'un test de compressibilité des données fournissant uniquement une information sur le rendement moyen de la compression, il est avantageux de réaliser un test de compressibilité après la compression de chaque paquet. Ce test décide du mode dans lequel sera transféré le paquet :

  . si la longueur du paquet résultant de la compression est supérieure ou égale à la longueur du paquet non compressé, ce dernier est transmis avec l'indication "mode transparent" ;
  . dans l'autre cas le paquet compressé est transmis avec l'indication "mode compressé".

Cette caractéristique essentielle de l'invention permet de pouvoir passer immédiatement du mode compressé au mode transparent. Elle est particulièrement efficace en début de communication, lorsque le dictionnaire n'est pas encore construit, et pour tous les paquets courts peu compressibles. C'est notamment le cas des paquets de 1 ou 2 octets, qui ne sont jamais compressibles.

Dans le mode de réalisation décrit, l'information de compression est transmise dans chaque paquet, dans un champ particulier. Toutefois, elle peut également ne pas être transmise systématiquement, mais uniquement à chaque changement de mode. Dans ce cas, elle peut soit être une donnée insérée dans un paquet, soit un paquet spécifique de changement de mode.

Le test de compressibilité paquet par paquet est préférentiellement couplé à un suivi classique du rendement moyen de la compression, permettant notamment une prise de décision lorqu'il est nécessaire de désactiver des opérations de compression.

Ainsi que cela a déjà été précisé, les fonctions de compression-décompression sont réalisées indépendamment pour chaque communication et pour chaque sens de transmission.

La compression est mise en oeuvre en fonction de paramètres de configuration ligne, et donc de façon identique pour tous les circuits virtuels d'une même ligne.

Plus précisément, le flux de données véhiculé sur un circuit virtuel pourra être compressé si les conditions suivantes sont réunies :

. les lignes terminales et/ou les terminaux, extrémités du circuit virtuel, sont configurées conjointement de façon à admettre la compression pour un sens de transmission donné ;

. le circuit virtuel emprunte au moins une ligne inter-noeud sur laquelle la compression est déclarée possible;

. les ressources nécessaires à la compression sont disponibles.

La compression s'effectue préférentiellement sur la partie la plus longue possible du circuit virtuel, et donc avantageusement entre les deux équipements sur lesquels sont connectés les terminaux. Toutefois, si l'un au moins de ces équipements n'est pas disponible pour la compression, celle-ci est mise en oeuvre dans le premier équipement rencontré disponible.

Préférentiellement, et notamment pour simplifier les opérations de désactivation de compression, la compression et la décompression sont effectuées, à chaque extrémité, dans un même équipement.

Les fonctions de contrôle de la compression, réalisées indépendamment dans chaque sens de transmission, permettent :

- la négociation de la compression à l'établissement de l'appel ;

- le contrôle de transfert de données :

. le passage du mode compressé au mode transparent et réciproquement ;

. la désactivation de la compression permettant de libérer les ressources (mémoire et processeur) affectés à la compression;

. la réinitialisation des dictionnaires en cas d'erreur ;

. la réactivation de la compression.

La négociation d'une compression peut notamment prendre en compte les paramètres suivants:

- paramètre de configuration ligne terminale (Jeton d'Autorisation "AUT") indiquant si la compression est autorisée pour les communications avec le terminal, en émission et/ou en réception ;

- paramètre de configuration ligne inter-noeud (Jeton d'Intérêt "IT") indiquant si la ligne justifie la compression pour les circuits virtuels qui l'empruntent ;

- charge processeur maximum affectée à la compression.

Cette négociation permet :

- de déterminer si la compression doit être activée pour ce circuit virtuel ainsi que le ou les sens de transmission concernés ;

- de déterminer la localisation (dans le réseau) des fonctions de compression/décompression ;

- de réserver des ressources nécessaires à la compression.

Les informations de contrôle utilisées pour la négociation dans les paquets d'appel et de confirmation d'appel (trois informations dans chaque sens de transmission) sont, dans le mode de réalisation décrit :

- Tx_AUT : Indique si l'extrémité terminale est configurée pour la compression.

- Tx_IT : Indique si au moins une ligne internoeud "avec compression" est traversée par le circuit virtuel.

- Tx_ACT : Demande / Confirmation d'activation de la compression (Jeton d'Activation). Cette information permet d'indiquer que la compression est à priori activée, les ressources ayant été réservées.

Pour l'autre sens de transmission, ces variables sont appelés Rx_AUT, Rx_IT et Rx_ACT.

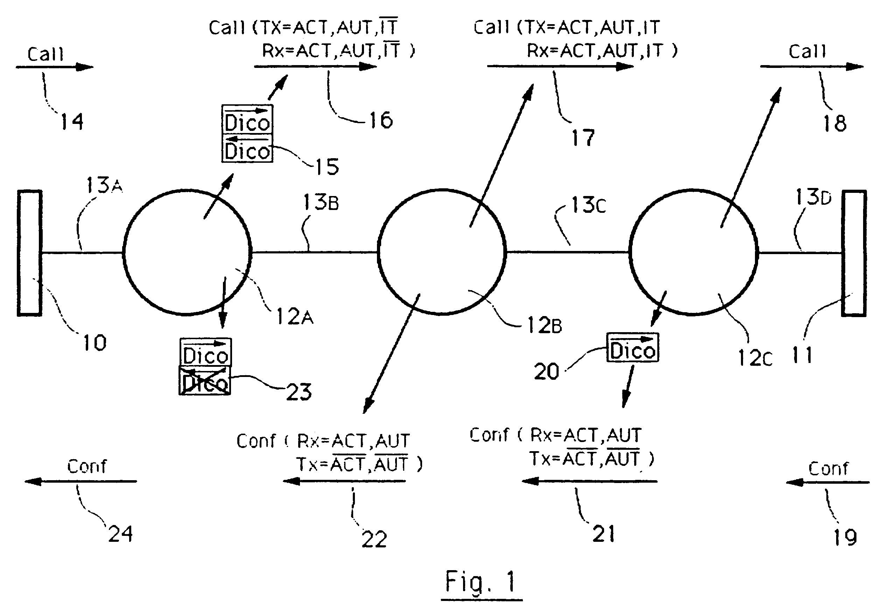

Un exemple de négociation est présenté en figure 1, dans lequel le terminal 10 entre en communication avec le terminal 11. La communication entre les deux terminaux utilise un circuit virtuel traversant trois noeuds intermédiaires $12_A$, $12_B$, $12_C$, reliés respectivement par les lignes de transmission $13_A$ à $13_D$.

La négociation est effectuée de proche en proche par chacun des équipements (noeuds) de compression traversés par le circuit virtuel.

Pour le mode de réalisation décrit, la négociation de la compression est réalisée lors de l'établissement d'un circuit virtuel au moyen des paquets d'appel et de confirmation d'appel.

Le terminal appelant 10 émet donc un appel 14 ("Call"), sur une ligne $13_A$, en précisant que la compression lui est autorisée dans les deux sens de transmission (Jetons "AUT" positionnés en autorisation), vers le noeud $12_A$, équipement intermédiaire sur lequel est connecté le terminal 10.

Dans cet exemple, on considère que le noeud $12_A$ est disponible pour la compression dans les deux sens de transmission, c'est-à-dire qu'il dispose des ressources nécessaires, en temps de traitement et place mémoire.

Ce noeud $12_A$ réserve donc un dictionnaire 15 pour chaque sens de transmission, mémorise les paramètres de la négociation et transmet l'appel (16) sur la ligne internoeud 13B avec une indication de compression activée dans les deux sens de transmission (Jetons d'Activation) et l'indication "pas de ligne "IT" traversée" (aucune ligne internoeud justifiant la compression), sous la forme Call Call (Tx = ACT, AUT, $\overline{IT}$ ; Rx = ACT, AUT, $\overline{IT}$ ).

Le noeud $12_B$ reçoit l'appel et mémorise les paramètres de négociation. En effet, lors de l'appel, les paramètres de la négociation sont mémorisés par chaque fonction de compression pour être exploités lors de la confirmation d'appel.

Le noeud $12_B$ modifie l'appel (17), et plus précisément le Jeton d'Intérêt IT, pour indiquer qu'une ligne justifiant la compression, la ligne $13_B$, a été traversée (puisque la compression a été activée en amont). Le format de l'appel devient donc, sur la ligne $13_C$ : Call (Tx = ACT, AUT, IT; Rx = ACT, AUT, IT).

Le noeud $12_C$ transmet l'appel (18) sans modification au terminal 11, après avoir mémorisé les paramètres de la négociation.

Le terminal 11 retourne un message confirmant l'appel (19).

On considère, dans cet exemple, que les données issues du terminal 11 ne doivent pas être compressées, par exemple parce que ce terminal a un très faible débit.

Le noeud $12_C$ auquel est connecté le terminal 11 réserve donc un dictionnaire 20 pour le sens de transmission du terminal 10 vers le terminal 11, puisque les paramètres mémorisés indiquent que la compression a été activée lors de l'appel dans ce sens de transmission et qu'au moins une ligne justifiant la compression est traversée. La compression n'est bien sûr pas activée dans l'autre sens, puisque non autorisée.

Le noeud $12_C$ transmet (21) donc au noeud $12_B$ le message Conf (Rx = ACT, AUT; Tx = $\overline{ACT}$, $\overline{AUT}$ ). Les Jetons d'Intérêt ne sont pas retournés. Si la compression n'est pas "intéressante", les Jetons d'Autorisation AUT sont positionnés en position de non autorisation.

La confirmation d'appel est ensuite transmise (22) jusqu'au noeud $12_A$ sans modification.

Le noeud $12_A$ libère (23) le dictionnaire réservé pour le sens de transmission du terminal 11 vers le terminal 10, et transmet (24) la confirmation au terminal 10.

Après initialisation de la communication, le transfert de données est contrôlé par trois informations de contrôle transmises, dans l'exemple décrit, dans les paquets de données :

- Tx_Act : Commande et indication d'activation de la compression dans le sens de transmission de l'extrémité compresseur vers l'extrémité décompresseur (compression désactivée / compression activée) ;
- Tx_Comp : Indication du mode de transfert utilisé : mode transparent (T) ou mode compressé (C);
- Rx_Act : Confirmation d'activation de la compression pour l'autre sens de transmission.

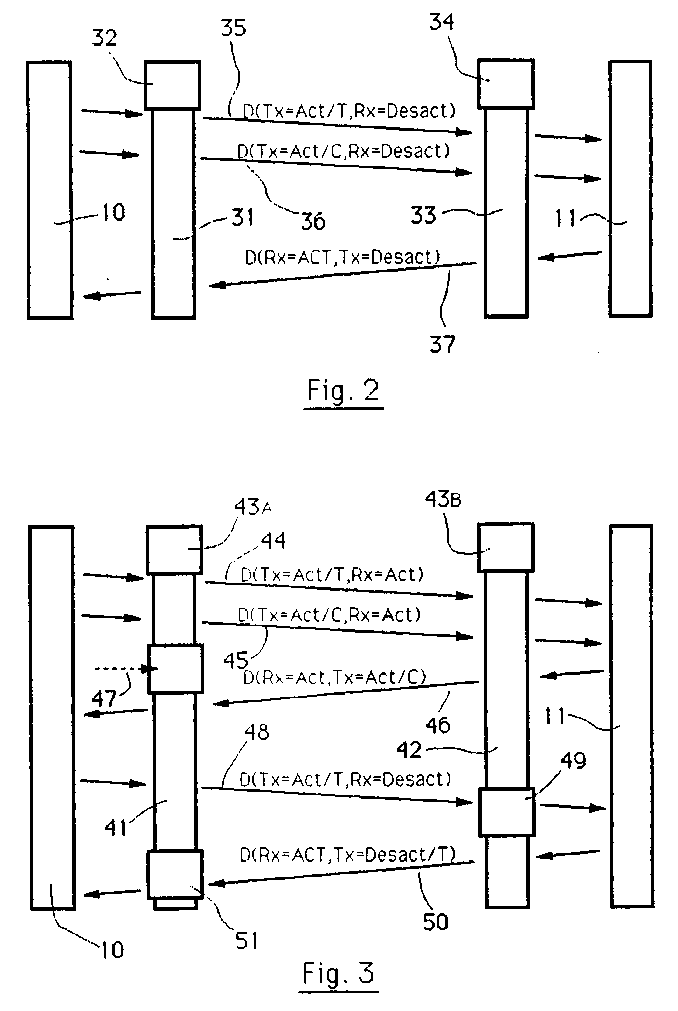

La figure 2 est un exemple de transfert de données entre un terminal 10 et un terminal 11, dans le cas où la compression est activée dans le sens 10 vers 11, mais non dans le sens 11 vers 10. Le noeud 31 comprend donc un seul dictionnaire 32 pour la compression, et le noeud 33 un dictionnaire 34 pour la décompression.

Les échanges de données peuvent alors être de trois types :

- transmission du terminal 10 vers le terminal 11 :

  . paquet 35 transmis en mode transparent, avec l'entête D (Tx = Act/T, Rx = Désact) ;
  . paquet 36 transmis en mode compressé, avec l'entête D (Tx = Act/C, Rx = Désact) ;

- transmission du terminal 11 vers le terminal 10 :

  . paquet 37 transmis systématiquement en mode transparent, avec l'entête D (Rx = Act, Tx = Désact).

Avantageusement, la compression est désactivée sur les circuits virtuels pour lesquels le taux de compression est inférieur à un minimum.

De même, si les ressources mémoire ou processeur deviennent insuffisantes, la compression est désactivée sur le ou les circuits virtuels pour lesquels le rendement de la compression est le plus faible.

La figure 3 illustre une opération de désactivation de la compression dans un des sens de transmission.

Avant désactivation, la compression est activée dans les deux sens de transmission. Les équipements 41 et 42 comprennent donc chacun des dictionnaires $43_A$ et $43_B$ pour les deux sens. Les échanges de données se font donc normalement, sous forme transparente 44 ou compressée 45,46, selon le résultat du test de compressibilité.

A un instant donné, la fonction de gestion des ressources de l'équipement 41 demande (47) la désactivation de la compression dans le sens du terminal 42 vers le terminal 41. La demande de désactivation est transmise à la première opportunité, c'est-à-dire dans le premier paquet 48 de données, avec l'entête D(Tx = Act/T (ou Act/C), Rx = Désact). Il est à noter qu'ainsi aucun paquet supplémentaire n'est rajouté. D'ailleurs, le procédé de l'invention peut être mis en oeuvre sans qu'il ne soit nécessaire d'ajouter aucun paquet spécial de négociation.

Dans un autre mode de réalisation de l'invention, les informations de négociation, et notamment les différents jetons, peuvent bien sûr être transmises à l'aide de paquets spécifiques. Cet autre mode de réalisation permet de conserver une transparence complète, les entêtes des paquets ne comportant aucune information spécifique à la compression.

A la réception de la demande 48 de désactivation, l'équipement 42 libère le dictionnaire pour le sens 42 vers 41, et transmet (50) la confirmation à la première opportunité, dans un paquet ayant l'entête D(Rx = Act, Tx = Désact/T).

A la réception de ce paquet 50, l'équipement 41 libère (51) le dictionnaire correspondant.

Dans le cas où la demande de désactivation concerne le sens de transmission de l'équipement demandeur de désactivation vers le second équipement, la procédure est légèrement plus simple. En effet, le dictionnaire est directement désactivé, dans l'équipement demandeur, lors de l'émission du paquet de demande de désactivation.

Si la compression a été désactivée sur un circuit virtuel par manque de ressource, la compression pourra être réactivé lorsque les ressources redeviennent suffisantes. Pour cela, les équipements disposent de moyens de réactivation de la compression.

Avantageusement, la compression peut être désactivée et réactivée régulièrement, en fonction de l'évolution des besoins, et, par exemple, en éliminant systématiquement, en cas de besoins de ressources, les compressions les moins efficaces.

Il est clair que ces différents exemples de négociation, de formats d'entête, etc... sont purement indicatifs. L'invention peut bien sûr être mise en oeuvre de plusieurs autres façons.

En particulier, les noeuds d'un tel systèmes ne sont pas nécessairement connecté à un réseau spécialisé. Ils peuvent également utiliser un réseau public.

Par ailleurs, et bien que l'exemple décrit ait été limité, pour des raisons de simplification de la présentation, à une seule opération de compression/décompression, l'invention s'applique évidemment aux cas ou plusieurs opérations de ce genre sont opérées successivement. Ce cas peut par exemple se présenter lorsque l'on utilise un réseau public de transmission par paquets, et deux réseaux privés distincts à chaque extrémité de ce réseau public (dans ce cas, le réseau public est considéré comme un terminal).

## Revendications

1. Système de transmission de données par paquets, du type comprenant une pluralité de terminaux (10, 11) émetteurs/récepteurs, associables par paires pour constituer des communications, et au moins deux équipements intermédiaires (12$_A$, 12$_B$, 12$_C$) de connexion,

   dans lequel certaines communications utilisent une chaîne de transmission comprenant deux terminaux émetteurs/récepteurs et au moins deux équipements intermédiaires,
   et dans lequel chaque paquet est associé à la transmission de données appartenant à une communication unique parmi lesdites communications constituées,
   caractérisé en ce qu'au moins certains desdits équipements intermédiaires (12$_A$, 12$_B$, 12$_C$) comprennent des moyens de compression et/ou de décompression, dans au moins un sens de transmission, des données contenues dans les champs de données des paquets transmis, selon au moins un algorithme de compression, et des moyens de contrôle de la mise en oeuvre desdits équipements (12$_A$, 12$_C$) de compression et de décompression, affectant sélectivement lesdits équipements (12$_A$, 12$_C$) de compression et de décompression à certaines desdites communications constituées, pour au moins une série de paquets consécutifs de chaque communication correspondante, de façon à compresser les données transmises sur au moins une portion de la chaîne de transmission.

2. Procédé de transmission de données dans un système de transmission par paquets, du type comprenant une pluralité de terminaux (10, 11) émetteurs/récepteurs, aassociables par paires pour constituer des communications, et au moins deux équipements intermédiaires (12$_A$, 12$_B$, 12$_C$) de connexion, selon la revendication 1, caractérisé en ce que l'établissement d'une communication entre un terminal appelant (10) et un terminal destinataire (11) comporte une étape de négociation des paramètres de compression comprenant:

   - une phase d'initialisation, dans laquelle un Jeton d'Activation (ACT) parcourt ladite chaîne de transmission entre les deux terminaux, et est positionné en position d'Activation par les équipements disponibles pour la compression,

- et une phase de validation de l'activation du mode de compression, dans les équipements correspondants de la chaîne de transmission, ladite validation étant réalisée lors du parcours d'initialisation dudit Jeton, lorsque, pour chacun desdits sens de transmission, le Jeton a rencontré au moins un équipement de compression suivi d'au moins un équipement de décompression disponibles.

## Claims

1. System of data transmission by packets, of the type comprising a plurality of transmitter/receiver terminals (10, 11), that can be associated in pairs to set up links, and at least two intermediate connection units ($12_A$, $12_B$, $12_C$),

   in which certain links use a transmission chain comprising two transmitter/receiver terminals and at least two intermediate units, and in which each packet is associated with the transmission of data belonging to only one link among said set-up links, characterized in that at least some of said intermediate units ($12_A$, $12_B$, $12_C$) include means for the compression and/or decompression, in at least one direction of transmission, of the data elements contained in the data fields of the packets transmitted, according to at least one compression algorithm, and means for the control of the activation of said means for the compression and decompression ($12_A$, $12_C$), which allocate selectively said means for the compression and decompression ($12_A$, $12_C$) to certain of said set-up links, for at least one series of consecutive packets of each corresponding link, so as to compress the data elements transmitted on at least a portion of the transmission chain.

2. Method for the transmission of data in a system of transmission by packets, of the type comprising a plurality of transmitter/receiver terminals (10, 11), that can be associated in pairs to set up links, and at least two intermediate connection units ($12_A$, $12_B$, $12_C$), according to claim 1, characterized in that the setting up of a link between a calling terminal (10) and a destination terminal (11) includes a step of negotiation of the compression parameters comprising:

   - an initialization stage in which an activation token (ACT) travels through said transmission chain between the two terminals, and is positioned in an activation position by the units available for the compression,

- and a stage to validate the activation of the compression mode in the corresponding units of the transmission chain, said validation being done during the initialization journey of said token when, for each of said directions of transmission, the token has encountered at least one unit available for compression followed by at least one unit available for decompression.

## Patentansprüche

1. System zur Paketübertragung von Daten, von der Art, die eine Mehrzahl von Sender-/Empfängerterminals (10, 11) umfäßt, die paarweise einander zugeordnet werden können, um Kommunikationsverbindungen herzustellen sowie mindestens zwei Verbindungszwischengeräte ($12_A$, $12_B$, $12_C$), wobei gewisse Kommunikationsverbindungen eine Übertragungskette anwenden, die mindestens zwei Sender-/Empfängerterminals und mindestens zwei Zwischengeräte umfaßt,

   und wobei jedes Paket der Übertragung von Daten zugeordnet ist, welches zu einer einzelnen Verbindung unter den hergestellten Kommunikationsverbindungen gehören, dadurch gekennzeichnet, daß mindestens einige der Zwischengeräte ($12_A$, $12_B$, $12_C$) Kompressions- und/oder Dekompressionsmittel in mindestens einer Übertragungsrichtung der Daten umfassen, die in den Datenfeldern der gesendeten Pakete enthalten sind, gemäß mindestens einem Kompressionsalgorithmus sowie über Mittel zur Kontrolle der Anwendung dieser Kompressions- und Dekompressionsgeräte ($12_A$, $12_C$) verfügen, welche diese Kompressions- und Dekompressionsgeräte ($12_A$, $12_C$) einigen der hergestellten Verbindungen selektiv zuordnen, für mindestens eine Reihe aufeinanderfolgender Pakete einer jeden entsprechenden Kommunikationsverbindung, um die gesendeten Daten über mindestens einen Teil der Übertragungskette zu komprimieren.

2. Datenübertragungssystem innerhalb eines Paketübertragungssystems, von der Art, die eine Mehrzahl von Sender-/Empfängerterminals (10, 11), die paarweise einander zugeordnet werden können, um Kommunikationsverbindungen herzustellen sowie mindestens zwei Verbindungszwischengeräte ($12_A$, $12_B$, $12_C$) gemäß Anspruch 1 umfaßt, dadurch gekennzeichnet, daß dem Zustandekommen einer Verbindung zwischen einem anrufenden Terminal (10) und einem Empfangsterminal (11) ein Schritt zum Treffen von Entscheidungen bezüglich der Kompressionsparameter gehört, der folgendes umfaßt:

- eine Initialisierungsphase, in der ein Aktivierungssymbol (ACT) die Übertragungskette zwischen den zwei Terminals durchläuft und von den verfügbaren Kompressionsgeräten in die Aktivierungsposition gebracht wird,
- sowie eine Phase zur Validierung des Kompressionsmodus in den entsprechenden Kompressionsgeräten der Übertragungskette, wobei diese Validierung beim Initialisierungsdurchlauf des Symbols erfolgt, wenn für jede Übertragungsrichtung das Symbol auf mindestens ein Kompressionsgerät trifft, auf das mindestens ein verfügbares Dekompressionsgerät folgt.

EP 0 493 286 B1

Call (TX=ACT,AUT,$\overline{\text{IT}}$
Rx=ACT,AUT,$\overline{\text{IT}}$ )

Call (TX=ACT,AUT,IT
Rx=ACT,AUT,IT )

Call → 14

Call → 18

Dico
Dico
15

16

13A   13B   13C   13D

12A   12B   12C   11

Dico
Dico
23

Dico
20

10

Conf ( Rx=ACT,AUT
Tx=$\overline{\text{ACT}}$,$\overline{\text{AUT}}$ )

Conf ( Rx=ACT,AUT
Tx=$\overline{\text{ACT}}$,$\overline{\text{AUT}}$ )

← Conf
24

← Conf
22

← Conf
21

← Conf
19

Fig. 1

Fig. 2

Fig. 3